Europäisches Patentamt

European Patent Office

Office européen des brevets

(19)

(11) Veröffentlichungsnummer: **0 215 529 B1**

(12) **EUROPÄISCHE PATENTSCHRIFT**

(45) Veröffentlichungstag der Patentschrift: **03.07.91**

(21) Anmeldenummer: **86201597.1**

(22) Anmeldetag: **17.09.86**

(51) Int. Cl.⁵: **G06K 13/067**, B65H 1/06,
B43M 5/04, G07B 17/00,
B65H 3/00

(54) **Vorrichtung zum Vereinzeln vorgefalzter faltbarer Blattstücke.**

(30) Priorität: **20.09.85 CH 4083/85**

(43) Veröffentlichungstag der Anmeldung:
**25.03.87 Patentblatt 87/13**

(45) Bekanntmachung des Hinweises auf die
Patenterteilung:
**03.07.91 Patentblatt 91/27**

(84) Benannte Vertragsstaaten:
**CH DE FR GB LI**

(56) Entgegenhaltungen:
**US-A- 2 092 524**

**HASLER MITTEILUNGEN Jahrgang 37, Nr. 1,
April 1978, Bern, Seiten 1-7; R. GRüNIG: "Die
Frankiermaschine Hasler Mailmaster"**

(73) Patentinhaber: **Ascom Hasler AG
Belpstrasse 23
CH-3000 Bern 14(CH)**

(72) Erfinder: **Flückiger, Daniel
Hauptstrasse 167
CH-3512 Walkringen(CH)**

(74) Vertreter: **Schwerdtel, Eberhard, Dr.
Ascom Tech AG Gewerblicher Rechtsschutz
Freiburgstrasse 370
CH-3018 Bern(CH)**

**Beschreibung**

Die Erfindung betrifft eine Vorrichtung zum Vereinzeln vorgefalzter, faltbarer Blattstücke, insbesondere von Briefkuverts mit Klappe entsprechend dem Oberbegriff von Anspruch 1. Die Erfindung betrifft weiter ein Verfahren zum Betrieb einer solchen Vorrichtung.

Von Frankiermaschinen sind Vereinzelungsvorrichtungen für Briefkuverts bekannt, z.B. aus Hasler Mitteilungen 37 (1978) 1, 1-7. Bei diesen Vorrichtungen liegen die Kuverts mit zugeklappter Klappe stapelweise auf einer Auflage. Durch eine Entnahmeeinrichtung, z.B. Rollen mit gut haftendem Belag, wird jeweils das unterste Kuvert in Längsrichtung weggezogen und dem Frankierwerk zugeführt. Hierbei kann die Klappe jeweils etwas geöffnet, befeuchtet, wieder geschlossen und unter Druck verklebt werden.

Es sind weiter Frankiermaschinen bekannt, bei denen Stapel von Briefkuverts einlegbar sind, bei denen die Klappen etwa unter einem rechten Winkel aufgeklappt sind. Bei dieser Art der Stapelung ergeben sich wegen der Papierstärke schräge Stapel, die seitlich gehalten sein müssen. Weiter muss sich zwischen der Seitenwand und der Auflage des jeweiligen Stapels ein Schlitz befinden, in den die Kuvertklappen eintauchen.

Wegen dieses Schlitzes ist jedoch eine exakte seitliche Führung nur bedingt gegeben, so dass die Stelle, an der der Frankaturstempel auf dem Kuvert angebracht wird, Schwankungen unterliegt. Weiter kommt es leicht vor, dass Kuverts schräg gestempelt werden, was bei hohen Qualitätsansprüchen unzulässig ist. Die Aufgabe der Erfindung besteht daher darin, eine Vereinzelungsvorrichtung für Stapel aus teilweise aufgeklappten Briefkuverts anzugeben, die eine bessere seitliche Führung bei Kuverts mit aufgeklappter Klappe ermöglicht.

Die Lösung dieser Aufgabe wird durch die Kennzeichen der unabhängigen Ansprüche wiedergegeben. Die abhängigen Ansprüche geben Ausgestaltungen der Erfindung an.

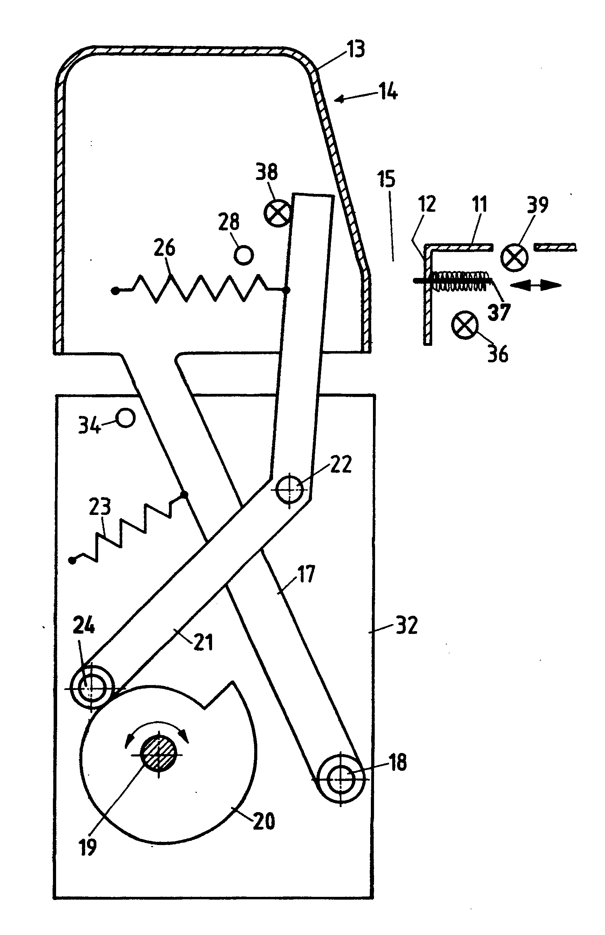

Im folgenden wird die Erfindung anhand einer einzigen Figur beispielsweise näher beschrieben. Die Figur zeigt eine zum Teil geschnittene seitliche Ansicht des Kuvertanlegers einer Frankiermaschine. Dieser Anleger weist eine Auflage 11 auf, auf die die nicht gezeigten Kuverts stapelweise aufgelegt werden. Eine ebenfalls nicht gezeigte Entnahmeeinrichtung, z.B. gummierte Rollen, greift durch die Auflage 11 und befördert seriell jeweils das unterste Kuvert in Richtung senkrecht zur Zeichnungsebene zum ebenfalls nicht gezeigten Frankierwerk. Ein Sensor 39, ist in die Auflage 11 eingelassen und detektiert, ob auf der Auflage 11 wenigstens ein Kuvert liegt oder nicht.

Zum seitlichen Stützen des Kuvertstapels dient eine Seitenwand 13. Werden auf die Auflage 11 Kuverts mit geschlossener Klappe aufgelegt, dann ist ein Schlitz 15 zwischen der seitlichen Kante 12 der Auflage 11 und der Seitenwand 13 im wesentlichen geschlossen, d.h. er weist minimale Breite auf.

Werden dagegen Briefkuverts mit halb aufgeklappter Klappe aufgelegt, so muss der Schlitz 15 so breit sein, dass er die Klappen eines ganzen Kuvertstapels aufnehmen kann, und zwar ohne sie zu verklemmen. Die Ruhestellung der Vorrichtung ist daher die, bei der die Seitenwand 13 abgeklappt ist bzw. der Schlitz 15 maximale Breite aufweist.

Der Mechanismus zur Verstellung der Breite des Schlitzes 15 ist folgender: Die Seitenwand 13 wird von bevorzugt zwei Trägerarmen 17 getragen (In der Figur ist nur einer dieser Arme 17 sichtbar), die um eine Achse 18 drehbar sind. Damit wird die Seitenwand 13 um diese Achse 18 drehbar.

Zum Antreiben der Seitenwand 13 dient ein elektromechanischer Antrieb, bestehend aus einem nicht gezeigten Elektromotor, der eine Kurvenscheibe 20 in beiden Drehrichtungen, angedeutet durch einen Doppelpfeil, um eine Achse 19 drehend antreiben kann. In stetigem Wirkkontakt mit dieser Kurvenscheibe 20 steht ein Antriebshebel 21, der drehbar um eine zweite Achse 22 gelagert ist. Der ständige Wirkkontakt kann entweder durch eine Feder 23, die am Hebel 21 oder am Trägerarm 17 geeignet angreift, bewirkt werden oder durch eine zwangsläufige Führung des Kontaktrades 24 des Antriebshebels 21 durch eine geeignet ausgebildete Kurvenscheibe.

Die Seitenwand 13 ist mit dem freien Ende des Antriebshebels 21 federelastisch verbunden. Hierzu dient z.B. eine vorgespannte Zugfeder 26, die zwischen dem Antriebshebel 21 und der Seitenwand 13 eingespannt ist und ein Anschlag 28, an dem die Seitenwand 13 und der Hebel 21 im Ruhezustand unter dem Zug der Feder 26 aneinander anliegen.

Im stationären Tragteil 32, an dem u.a. die Achsen 18, 19 und 22 befestigt sind, ist ein weiterer Anschlag 34 angeordnet, der die Auslenkung des Trägerarms 17 in der einen Richtung begrenzt.

Zur Steuerung des Antriebsmotors ist eine Steuerungselektronik vorgesehen. Diese erhält logische Signale von insgesamt drei Sensoren, die durch die Elektronik zu Steuersignalen für den Antriebsmotor umgewandelt werden.

Der erste Sensor 39 ist, wie bereits erwähnt, in der Auflage 11 montiert und detektiert die Anwesenheit von Briefkuverts. Der zweite Sensor 36 ist in der Kante 12 und der dritte Sensor 38 an der Seitenwand 13 vorgesehen. Die Sensoren können Mikroschalter sein oder bevorzugt optoelektrische Detektoren, z.B. Reflexions- oder Gabellichtschranken.

Der zweite Sensor 36 spricht auf seitlichen Druck in Richtung zur Kante 12 an. Zur Aufnahme dieses Drucks dient beispielsweise ein federbelasteter Stift 37, wobei die Federkraft für diesen Stift 37 klein ist gegenüber der Kraft der vorgespannten Feder 26.

Der dritte Sensor 38 spricht auf die relative Verschiebung zwischen dem freien Ende des Antriebshebels 21 und der Seitenwand 13 an. Das Anliegen des Antriebshebel 21 am Anschlag 28 entspricht der Ruhestellung dieses Sensors 38.

Die Vorrichtung arbeitet wie folgt: Als Ruhestellung ist, wie bereits erwähnt, die Stellung definiert, bei der der Schlitz 15 maximale Breite aufweist. Wird nun ein Stapel Briefkuverts mit offenen Klappen in den Anleger eingelegt, so spricht der erste Sensor 39 an, der Motor schaltet ein und verschmälert den Schlitz 15 so lange, bis der zweite Sensor 36 ebenfalls anspricht. Dies ist der Fall, sobald alle Kuvertklappen bündig im Schlitz 15 liegen. Jetzt kann das Vereinzeln der Kuverts beginnen. Nacheinander wird jeweils das unterste Kuvert abgefördert. Hierdurch entsteht sukzessive zusätzlicher Platz für die verbleibenden Klappen im Schlitz 15, so dass der zweite Sensor 36 in seine Ruhestellung zurückkehren kann. Dies ergibt dann wiederum ein Startsignal für den Motor, der den Schlitz 15 so lange verschmälert, bis der zweite Sensor 36 wiederum anspricht.

Sukzessive verschmälert sich auf diese Weise der Schlitz 15 so lange, bis er seine minimale Breite erreicht. In diesem Fall wird oder wurde das letzte Kuvert abgefördert, so dass der erste Sensor 39 hierauf anspricht und damit das Signal für die Umkehr der Motordrehrichtung auslöst. Hierdurch öffnet sich der Schlitz 15 wieder und die Seitenwand 13 erreicht wieder ihre Ruhestellung.

Diese automatisch ablaufenden Vorgänge können jederzeit unterbrochen werden, indem die Seitenwand 13 gegen die Kraft der Feder 26, d.h. in Richtung des Pfeiles 14, manuell weggedrückt wird. Hierdurch entsteht zum einen sofort eine Verbreiterung des Schlitzes 15, so dass z.B. weitere Briefkuverts einem bereits vorhandenen Stapel zugefügt werden können. Zum anderen spricht der dritte Sensor 38 und eventuell auch der zweite Sensor 36 an. Hierdurch wird in jedem Fall der Motor in Rücklaufrichtung gestartet, so dass die Kurvenscheibe 20 so verdreht wird, dass der Antriebshebel 21 schlussendlich wieder am Anschlag 28 anliegt. Dies kann die Stellung sein, in der die Trägerarme 17 am zweiten Anschlag 34 anliegen, oder irgendeine Zwischenstellung. Sobald diese Stellung erreicht ist, meldet dies der Sensor 38, der Motor wird hierdurch umgesteuert und zieht nun über die Kurvenscheibe 20, den Antriebshebel 21 und die Zugfeder 26 die Seitenwand 13 in Richtung zur Kante 12. Die Seitenwand 13 drückt hierdurch wiederum die Klappen der Briefkuverts in der beschriebenen Weise gegen die Kante 12, wodurch der erste Sensor 36 anspricht und den Motor stoppt.

Um sicherzustellen, dass die Kurvenscheibe 20 nicht überdreht wird, kann diese mit zwei weiteren Sensoren gekoppelt sein, z.B. über Schlitze oder Löcher in der Scheibe 20, die als Winkelbegrenzer dienen. Als weitere Sicherheit empfiehlt es sich, eine Strombegrenzung für den Elektromotor vorzusehen, die beim eventuellen Blockieren des Motors den Strom auf einen solchen Wert beschränkt, bei dem der Motor noch nicht beschädigt wird.

Die Vorrichtung kann in mannigfaltiger Weise abgewandelt werden, ohne dass die Grundidee verändert wird. Solche Varianten sind zum Beispiel:

- Antrieb des Antriebshebels 21 nicht über eine Kurvenscheibe 20, sondern über eine Spindel;
- Ersetzen der Zugfeder 26 durch eine Klammerfeder zwischen Antriebshebel 21 und Trägerarm 17;
- Änderung der Geometrie von Seitenwand 13, Trägerarm 17 und Antriebshebel 21, z.B. zum Zwecke der Zusammenfassung der Achsen 18 und 22 zu einer einzigen Achse.

Ergänzend sei bemerkt, dass es vorteilhaft ist, die Seitenwand 13 aus zwei Teilen zu fertigen, und zwar aus einem metallenen Innenteil, das nahtlos in die Trägerarme 17 übergeht, und aus einem Überzug aus gespritztem oder gezogenem Kunststoff.

Andere vorgefalzte, faltbare Blattstücke als Kuverts können z.B. Postkarten mit abgeklapptem, selbstklebendem Adressenteil sein.

## Ansprüche

1. Vorrichtung zum Vereinzeln vorgefalzter, faltbarer Blattstücke, insbesondere von Briefkuverts mit Klappe,
   - mit einer Auflage (11) zum stapelweisen Auflegen der Blattstücke,
   - mit einer Entnahmeeinrichtung zum seriellen Entnehmen des jeweils untersten Blattstückes,
   - mit einer Seitenwand (13) zum seitlichen Stützen und Führen der aufgelegten Blattstücke,
   - mit einem in seiner Breite verstellbaren Schlitz (15) zwischen der Seitenwand (13) und der der Seitenwand zugewandten Kante (12) der Auflage (11) zur Aufnahme der etwa unter einem Winkel von 90 Grad aufgeklappten Vorfalze, gekennzeichnet
   - durch einen elektromechanischen Antrieb (20, 21) zur Veränderung der Breite des Schlitzes (15) und eine zugeordnete Steuerung,
- durch einen ersten Sensor (39) in der Auflage (11), der anspricht auf aufgelegte Blattstücke,
- durch einen zweiten Sensor (36) an der Kante (12) der Auflage (11), der anspricht auf eine Kraft in Richtung zur Kante (12),
- durch einen dritten Sensor (38) an der Seitenwand (13), der anspricht bei Auslenkung der Seitenwand (13) zur Verbreiterung des Schlitzes (15), und
- durch eine federelastische Verbindung, die den Antrieb (20, 21) mit der Seitenwand (13) verbindet.

2. Vorrichtung nach Anspruch 1,
dadurch gekennzeichnet,
- dass der elektromechanische Antrieb (20, 21) einen Elektromotor umfasst, eine mit diesem gekoppelte Kurvenscheibe (20) und einen Antriebshebel (21), der um eine erste Achse (22) drehbar gelagert ist und mit der Kurvenscheibe (20) in ständiger Wirkverbindung steht,
- dass die Seitenwand (13) drehbar um eine zweite Achse (18) gelagert ist, und
- dass die Verbindung des Antriebs (20, 21) und der Seitenwand (13) aus einer vorgespannten Feder (26) und aus einem Anschlag (28) besteht, an dem die Seitenwand (13) und der Antriebshebel (21) unter der Wirkung der Feder (26) aneinander anliegen.

3. Vorrichtung nach Anspruch 1 und 2,
dadurch gekennzeichnet,
dass die Kraft zum Betätigen des zweiten Sensors (36) klein ist im Vergleich zur Kraft der vorgespannten Feder (26).

4. Vorrichtung nach Anspruch 2,
dadurch gekennzeichnet,
dass ein zweiter Anschlag (34) vorgesehen ist, der eine Auslenkung der Seitenwand (13) relativ zum Antriebshebel (21) begrenzt.

5. Vorrichtung nach Anspruch 1,
dadurch gekennzeichnet,
dass dem Antrieb ein vierter und ein fünfter Sensor zugeordnet ist, die durch ihre Signale die Drehbewegung der Kurvenscheibe (20) in die eine bzw. die andere Drehrichtung begrenzen.

6. Verfahren zum Betrieb der Vorrichtung nach Anspruch 1,
dadurch gekennzeichnet,

- dass die Seitenwand (13) zur Verbreiterung des Schlitzes (15) entgegen der Kraft der federelastischen Verbindung manuell seitlich ausgelenkt wird,
- dass hierdurch der dritte Sensor (38) den Antrieb so steuert, dass der Schlitz (15) breiter wird,
- dass bei fehlender manueller Auslenkung der Seitenwand (13) und betätigtem ersten Sensor (39) und nicht betätigtem zweiten Sensor (36) dieser den Antrieb so steuert, dass der Schlitz (15) schmaler wird, und
- dass bei fehlender manueller Auslenkung der Seitenwand (13) und betätigtem zweiten Sensor (36) der Antrieb angehalten wird.

**Claims**

1. Device for seperating prefolded, foldable sheets, particularly letter envelopes with flap,
    - having a support (17) for the stacked application of the sheets,
    - with a removal device for the serial removal of the in each case bottom sheet,
    - with a side wall (13) for the lateral supporting and guidance of the stacked sheets,
    - with a width-adjustable slot (15) between the side wall (13) and the edge (12) of the support (11) facing the side wall for receiving the prefold opened roughly at an angle of 90°
    - characterized by
    - an electromagnetic drive (20,21) for modifying the width of the slot (15) and an associated control,
    - a first sensor (39) in the support (11), which responds to the stacked sheets,
    - a second sensor (36) on the edge (12) of the support (11), which responds to a force in the direction of the edge (12),
    - a third sensor (38) on the side wall (13), which responds in the case of a deflection of the side wall (13) for widening the slot (15) and
    - an elastic connection connecting the drive (20,21) to the side wall (13).

2. Device according to claim 1, characterized in that the electromagnetic drive (20,21) comprises an electric motor, a cam disk (20) coupled thereto and a drive lever (21), which is rotatable about a first spindle (22) and is in constant operative connection with the cam disk (20), that the side wall (13) is mounted so as to rotate about a second spindle (18) and that the connection of the drive (20,21) and the side wall (13) comprises a pretensioned spring (26) and a stop (28), on which the side wall (13) and the drive lever (21) engage against one another under the action of the spring (26).

3. Device according to claims 1 and 2, characterized in that the tension for operating the second sensor (36) is small compared with the tension of the pretensioned spring (26).

4. Device according to claim 2, characterized in that a second stop (34) is provided, which limits a deflection of the side wall (13) relative to the drive lever (21).

5. Device according to claim 1, characterized in that with the drive is associated a fourth and a fifth sensor which, through their signals, limit the rotary movement of the cam disk (20) in one or other rotation directions.

6. Method for operating the device according to claim 1, characterized in that the side wall (13) is manually laterally deflected counter to the tension of the elastic connection for widening the slot (15), that as a result the third sensor (38) controls the drive so that the slot (15) becomes wider, that when there is no manual deflection of the side wall (13) and an actuated first sensor (39) and a non-actuated second sensor (36) the latter controls the drive in such a way that the slot (15) narrows and that when there is no manual deflection of the side wall (13) and the second sensor (36) is actuated the drive is stopped.

**Revendications**

1. Dispositif pour séparer des feuilles pliables pré-repliées, notamment des enveloppes avec rabat,
    - avec un support (11) pour déposer en pile des feuilles,
    - avec un dispositif de prise pour prendre successivement la feuille qui se trouve en-dessous,
    - avec une paroi latérale (13) pour l'appui latéral et le guidage des feuilles empilées,
    - avec une fente réglable (15) en largeur entre la paroi latérale (13) et le bord tourné vers la paroi latérale (12) du support (11) pour recevoir la partie pré-repliée ouverte d'un angle de 90 degrés,
    caractérisé :
    - par un entraînement électromécanique (20, 21) pour modifier la largeur de la fente (15) et une commande appropriée,
    - par un premier capteur (39) placé dans le support (11), qui est excité par le dépôt de feuilles,
    - par un deuxième capteur (36) au bord (12) du support (11) qui est excité par une force dirigée vers le bord (12),
    - par un troisième capteur (38) sur la paroi latérale (13) qui est excité par l'écartement de la paroi latérale (13) pour élargir la fente (15), et
    - par une liaison élastique à ressort qui relie l'entraînement (20, 21) à la paroi latérale (13).

2. Dispositif selon la revendication 1, caractérisé en ce que :
    - l'entraînement électromécanique (20, 21) comprend un moteur électrique, un disque incurvé (20) qui lui est relié et un levier d'entraînement (21), qui est logé en rotation sur un premier axe (22) et qui est en coopération permanente avec le disque incurvé (20),
    - la paroi latérale (13) peut tourner autour d'un deuxième axe (18) sur lequel elle est logée, et
    - la liaison de l'entraînement (20, 21) et de la paroi latérale (13) comprend un ressort précontraint (26) et une butée (28), sur laquelle repose la paroi latérale (13) et le levier d'entraînement (21) sous l'effet du ressort (26).

3. Dispositif selon la revendication 1 et 2, caractérisé en ce que la force nécessaire pour commander le deuxième capteur (36) est petite devant la force du ressort précontraint (26).

4. Dispositif selon la revendication 2, caractérisé en ce qu'on prévoit une deuxième butée (34), qui limite un débattement de la paroi latérale (13) par rapport au levier d'entraînement (21).

5. Dispositif selon la revendication 1, caractérisé en ce qu'on attribue à l'entraînement un quatrième et un cinquième capteur, qui par leurs signaux limitent le mouvement de rotation du disque incurvé (20) dans un sens ou dans l'autre.

6. Procédé de fonctionnement du dispositif selon la revendication 1, caractérisé en ce que :
    - on éloigne à la main la paroi latérale (13) pour élargir la fente (15) en opposition à la force de la liaison élastique à ressort,
    - ainsi le troisième capteur (38) commande l'entraînement de telle façon que la fente (15) devienne plus large,

- en l'absence d'écartement manuel de la paroi latérale (13) et avec la commutation du premier capteur (39) et la non commutation du deuxième capteur (36), celui-ci commande l'entraînement, de sorte que la fente (15) se rétrécisse, et
- qu'en l'absence d'écartement manuel de la paroi latérale (13) et en actionnant le deuxième capteur (36) on arrête le moteur.